(19) Europäisches Patentamt

European Patent Office

Office européen des brevets

(11) Veröffentlichungsnummer: **0 329 816 B1**

(12) **EUROPÄISCHE PATENTSCHRIFT**

(45) Veröffentlichungstag der Patentschrift: **04.03.92**

(51) Int. Cl.⁵: **B65G 39/09**, B60B 33/08

(21) Anmeldenummer: **88107290.4**

(22) Anmeldetag: **06.05.88**

(54) **Förderkugeleinheit.**

(30) Priorität: **22.02.88 DE 3805494**

(43) Veröffentlichungstag der Anmeldung:
**30.08.89 Patentblatt 89/35**

(45) Bekanntmachung des Hinweises auf die
Patenterteilung:
**04.03.92 Patentblatt 92/10**

(84) Benannte Vertragsstaaten:
**DE ES FR GB IT**

(56) Entgegenhaltungen:
**EP-A- 0 162 484**
**GB-A- 1 266 501**

(73) Patentinhaber: **BAVARIA CARGO TECHNOLO-
GIE GMBH**
**Kirschstrasse 20**
**W-8000 München 50(DE)**

(72) Erfinder: **Huber, Thomas**
**Schechen 2a**
**W-8127 Iffeldorf(DE)**

(74) Vertreter: **Uri, Peter Alexander, Dipl.-Ing. et al
Patentanwälte Strohschänk, Uri & Strasser
Innere Wiener Strasse 8
W-8000 München 80(DE)**

## Beschreibung

Die Erfindung betrifft eine Förderkugeleinheit, insbesondere zum Bewegen von Frachtgut auf einer Förderbahn, mit einem, eine vertikale Mittelachse aufweisenden, etwa hohlzylindrischen Gehäuse, einer zentrisch zur Mittelachse auf einer Vielzahl von Lagerkugeln in einer Lagerschale drehbar gelagerten, über das offene Ende des Gehäuses hinausragende Förderkugel, einer die Förderkugel ringförmig von oben umgreifenden, die Förderkugel und die Lagerkugeln beweglich in der Lagerschale sichernden Kugelführung, und mit einer die Lagerschale von unten her nach oben elastisch vorspannenden, am Gehäuse abgestützten Federanordnung, wobei die Förderkugel, die Lagerkugeln und die Lagerschale als Einheit innerhalb des Gehäuses bewegbar und entgegen der Federkraft der Federanordnung entlang der Mittelachse nach unten drückbar sind.

Derartige Förderkugeleinheiten werden beispielsweise in Kugelförderbahnen verwendet, die beispielsweise im Frachtraum von Frachtflugzeugen zum Bewegen von Frachtbehältern beim Beladen oder Entladen vorgesehen sind. An die Förderkugeleinheiten werden dabei insbesondere die Forderungen gestellt, daß sie wartungsfrei und sehr robust sind und dennoch ein geringes Gewicht besitzen. Bei einer aus der DE-PS 22 13 021 bekannten Förderkugeleinheit der eingangs genannten Art ist die auf einer Vielzahl von Lagerkugeln drehbar gelagerte Förderkugel mit einer etwa halbkugeligen Lagerschale und einer damit fest verbundenen, die Förderkugel auf den Lagerkugeln haltende Kugelführung zu einer Lagereinheit zusammengefaßt, die in einem etwa hohlzylindrischen Gehäuse entlang der Mittelachse dieses Gehäuses bewegbar ist. Das Gehäuse selbst ist lösbar in dem Paneel einer Förderbahn festgelegt. Zwischen der unteren Bodenwand und den Rand der Lagereinheit im Bereich des Umfangsrandes der Lagerschale ist eine Spiralfeder vorgesehen, welche die Lagereinheit im unbelasteten Zustand der Förderkugel nach oben gegen eine ringförmige Anschlagschulter im Gehäuse vorspannt, so daß die Förderkugel durch eine zentrale Öffnung in der Kugelführung nach oben über die Oberfläche des Paneels der Förderbahn hinausragt. Bei Belastung durch einen Frachtbehälter kann die Förderkugel zusammen mit der gesamten Lageranordnung entgegen der Kraft der Spiralfeder in das Gehäuse hinein nach unten eingefedert werden, bis die Unterseite der Lagerschale auf einem im Gehäuse geformten Anschlag auftrifft.

Problematisch ist es dabei in der Praxis, daß die Förderkugel sehr häufig nicht nur mit rein vertikal nach unten gerichteten Kräften belastet wird, sondern meistens auch mit seitlichen Schiebekräften, die von dem Rand der oberen Öffnung der Kugelführung aufgenommen werden müssen. Diese Kugelführung muß daher sehr stabil und sehr genau um die Förderkugel passend ausgebildet werden. Darüber hinaus ergibt sich bei einer Belastung der Förderkugel mit einer seitlichen Kraftkomponente häufig der Fall, daß die Lageranordnung im Gehäuse verkippt nach unten gedrückt wird, da die Spiralfeder keine seitlichen Kräfte aufzunehmen vermag. Wenn aus einer derartig verkippten Stellung die Lagereinheit durch die Kraft der Feder im Gehäuse wieder nach oben gedrückt wird, kann der Fall eintreten, daß der obere ringförmige Begrenzungsflansch der Kugelführung unter eine am oberen Rand der Gehäuseöffnung gebildete Ringschulter stößt, so daß die Rückführung der Lagereinheit und der Förderkugel in ihre normale Ruhelage nicht mehr möglich ist. Die Förderkugeleinheit ist dann verklemmt und muß von einer Bedienungsperson manuell wieder in ihre normale Gebrauchslage zurückgebracht werden. Auch eine Beschädigung der Förderkugeleinheit ist bei einem derartigen Vorgang möglich. Diese bekannte Förderkugeleinheit ist insgesamt aus Metall hergestellt, so daß sich ein hohes Gewicht ergibt. Wegen der notwendigen genauen Passung der Kugelführung an der Förderkugel ist zudem ein hoher Bearbeitungsaufwand bei der Herstellung erforderlich und schon geringe Beschädigungen der Kugelführung im rauhen Frachtladeeinsatz führen zu einem hohen Bewegungswiderstand und damit einer Schwergängigkeit der Förderkugel.

Die EP-A-162 484 und die GB-A-1 266 501 zeigen die Verwendung von Tellerfedern und von asphärischen Lagern bei Förderkugeleinheiten.

Die der Erfindung zugrundeliegende Aufgabe besteht darin, eine Förderkugeleinheit der eingangs genannten Gattung zu schaffen, bei der ein Verkanten und nachfolgendes Verklemmen der Lageranordnung im Gehäuse sicher vermieden wird.

Gemäß der Erfindung wird diese Aufgabe dadurch gelöst, daß die Lagerschale insgesamt derart asphärisch gestaltet ist, daß die Förderkugel über Lagerkugeln nur auf einem zur Mittelachse konzentrischen ringförmigen Bereich der Lagerschale abgestützt ist, daß die Federanordnung als Paket aus ringförmigen Tellerfedern ausgebildet ist, deren Außendurchmesser dem benachbarten Innendurchmesser des Gehäuses angepaßt ist, und daß die Lagerschale mit ihrem ringförmigen Bereich auf dem inneren Rand der obersten ringförmigen Tellerfeder der Federanordnung abgestützt ist.

Bei dieser erfindungsgemäßen Ausgestaltung ist also insbesondere vorgesehen, daß sich die Förderkugel über einen Teil der in der Lagerschale befindlichen Lastkugeln nur auf einem ringförmigen Bereich der Lagerschale symmetrisch zur Mittelachse abstützt. Dadurch zentriert sich die Förderkugel selbst bezüglich der Lagerschale und diese Zentrierung bleibt auch dann erhalten, wenn von oben her auf die Förderkugel Kräfte mit einer seitlichen Komponente ausgeübt werden.

Die Lagerschale selbst liegt gerade mit diesem ringförmigen Bereich an dem oberen inneren Rand der obersten Tellerfeder der Federanordnung auf, so daß sie sich ihrerseits selbsttätig bezüglich der ringförmigen Tellerfedern der Federanordnung zentriert. Die Federanordnung wiederum ist mit ihrem Außendurchmesser an den Innendurchmesser der zylindrischen Gehäusewand angepaßt, so daß sie bezüglich des Gehäuses und damit auch bezüglich der Mittelachse dieses Gehäuses zentriert gehalten ist.

Zusammengefaßt ist also durch die erfindungsgemäße Ausgestaltung gewährleistet, daß auch bei auf die Förderkugel einwirkenden seitlichen Kraftkomponenten die Förderkugel, die Lagerschale und die Federanordnung zueinander und bezüglich der Mittelachse des Gehäuses selbsttätig zentriert gehalten sind und daß diese Zentrierung auch dann erhalten bleibt, wenn durch Krafteinwirkung auf die Förderkugel die gesamte Anordnung innerhalb des Gehäuses entgegen der Kraft der Federanordnung nach unten eingefedert wird. Es ist daher unmöglich, daß eine Verklemmung dieser Teile im Gehäuse wie bei der nach dem Stand der Technik bekannten Förderkugeleinheit auftritt.

Von besonderem Vorteil ist es dabei, daß Kräfte, die von oben her auf die Förderkugel ausgeübt werden, unmittelbar über die Lagerkugeln auf die Lagerschale übertragen werden, und daß dabei keinerlei Kräfte auf die Kugelführung einwirken. Diese Kugelführung dient daher primär ausschließlich dazu, ein Herausfallen der Lagerkugeln und der Förderkugel aus der Kugelschale beim Umdrehen der Einheit zu verhindern.

Der ringförmige Körper dieser Kugelführung kann daher mit erheblichem Spiel gegenüber dem Umfang der Förderkugel ausgebildet werden, so daß zwischen diesen Teilen einerseits keinerlei Reibungskräfte auftreten und ein leichtgängiges Rollen der Förderkugel gewährleistet ist. Da die Kugelführung keine größeren Kräfte aufnehmen muß kann sie sehr leicht ausgebildet und aus Kunststoff gefertigt werden.

Kräfte, die durch einen zu fördernden Gegenstand von oben her und gegebenenfalls mit seitlicher bzw. zur Mittelachse radialer Komponente auf die Förderkugel ausgeübt werden, gelangen also von diese über einige der Lagerkugeln unmittelbar auf den ringförmigen Bereich der Lagerschale und weiter über die Tellerfedern der Federanordnung unmittelbar auf die zylindrische Wand des Gehäuses, die sie ihrerseits auf kürzestem Wege auf die umgebende tragende Struktur des Paneels der Förderbahn weitergeben kann. Es stellt sich also auf kürzestem Wege ein günstig gestalteter Kraftfluß ein, der es gestattet, die einzelnen Bauteile sehr leicht auszugestalten, wobei das Gehäuse selbst ohne weiteres aus dünnwandigem Kunststoff gefertigt werden kann, da es im Bereich des Kraftübergangs keinen Biegebeanspruchungen ausgesetzt ist.

Fertigungstechnisch ist es günstig, wenn sich gemäß einer Ausgestaltung der Erfindung die Lagerschale in etwa über einen die Förderkugel von unten her im Abstand umgreifenden Halbkugelbereich erstreckt.

Bei einer besonders bevorzugten Ausgestaltung ist vorgesehen, daß der obere, bis zum Rand hin reichende Bereich der Lagerschale als ringförmiger Kugelabschnitt ausgebildet ist, dessen Radius um ein vorbestimmtes Maß geringfügig größer ist als die Summe des Radius der Förderkugel und des Durchmessers der Lagerkugeln, daß der Mittelpunkt dieses Kugelabschnitts auf der Mittelachse um ein vorbestimmtes Maß über dem Mittelpunkt der Förderkugel liegt, daß sich an den unteren Rand des ringförmigen Kugelabschnitts ein die Mittelachse zentrisch umgebendes, sich nach unten auswölbendes Kugelsegment anschließt, dessen Radius kleiner ist als der Radius des ringförmigen Kugelabschnitts und dessen Mittelpunkt um ein erhebliches Maß unter dem Mittelpunkt der Förderkugel auf der Mittelachse liegt. Diese Gestaltung der asphärischen Lagerschale gewährleistet einen ringförmigen Lagerbereich für die Förderkugel im Sinne der Erfindung und ist fertigungstechnisch vorteilhaft. Bei dieser Ausführung wird erreicht, daß einerseits im oberen Randbereich der Lagerschale zwischen den Lagerkugeln und der getragenen Förderkugel ein kleines Spiel entsteht und andererseits auch ein kleiner Spalt bzw. ein Spiel im zentralen Bereich um die Mittelachse herum. Es wird dadurch der gewünschte ringförmige Lagerbereich für die Förderkugel gewährleistet und ein geringer Rollwiderstand sichergestellt.

Günstige geometrische Verhältnisse bei der Lagerschale stellen sich dadurch ein, daß sich das Kugelsegment ausgehend vom Mittelpunkt des Kugelabschnitts bezüglich der Mittelachse über einen Winkel von etwa 20 bis 30° erstreckt. Es wird dadurch der ringförmige Lagerbereich an eine für einen guten Kraftfluß günstige Stelle gelegt.

Bei einer besonders bevorzugten Ausgestaltung ist vorgesehen, daß die Kugelführung die Förderkugel ringförmig lose umgreift und daß am oberen Innenrand der ringförmigen Kugelführung eine gegen die Förderkugel abdichtende Dichtlippe angebracht ist. Da die Kugelführung keine kraftaufnehmende Funktion ausübt und insbesondere in seitlicher Richtung kaum belastet ist, läßt sich eine derartige Dichtlippe mit schwachem Auflagedruck auf die Förderkugel gestalten, so daß trotz guter Abdichtung der Rollwiderstand der Förderkugel gering bleibt.

Weiterhin ist es bevorzugt, daß die Kugelführung am Umfangsrand mit mehreren über den Umfang verteilten, nach unten ragenden Schnappnasen versehen ist, welche in zusammengebautem Zustand unter einen am oberen Rand der Lagerschale angeformten horizontalen Flansch einschnappend eingreifen. Durch diese Ausgestaltung hält nach dem Zusammenbau der Lagerschale, der Lagerkugeln, der Förderkugel und der Kugelführung die ganze Anordnung als Einheit zusammen und bewegt sich auch als Einheit innerhalb des Gehäuses entgegen der Kraft der Federanordnung nach unten, sobald auf die Förderkugel nach unten eine Kraft ausgeübt wird.

Besonders bevorzugt ist es, wenn die Kugelführung einstückig aus Kunststoff geformt ist. Das bedeutet, daß sowohl die Dichtlippen als auch die Schnappnasen Bestandteile der Kugelführung darstellen und einstückig mit dieser ausgebildet sind.

Die Erfindung wird im folgenden beispielsweise unter Bezugnahme auf die Zeichnung näher erläutert; es zeigt:

Fig. 1 eine vertikale Schnittansicht durch die Mittelachse des Gehäuses entlang der Schnittlinie I-I der Fig. 2;

Fig. 2 eine Draufsicht auf die Förderkugeleinheit der Fig. 1 und einen ausgebrochenen Teil des umgebenden Paneels einer Förderbahn; und

Fig. 3 eine stark schematisierte und nicht maßstäbliche Schnittdarstellung der Förderkugel, der Lagerkugeln und der Lagerschale.

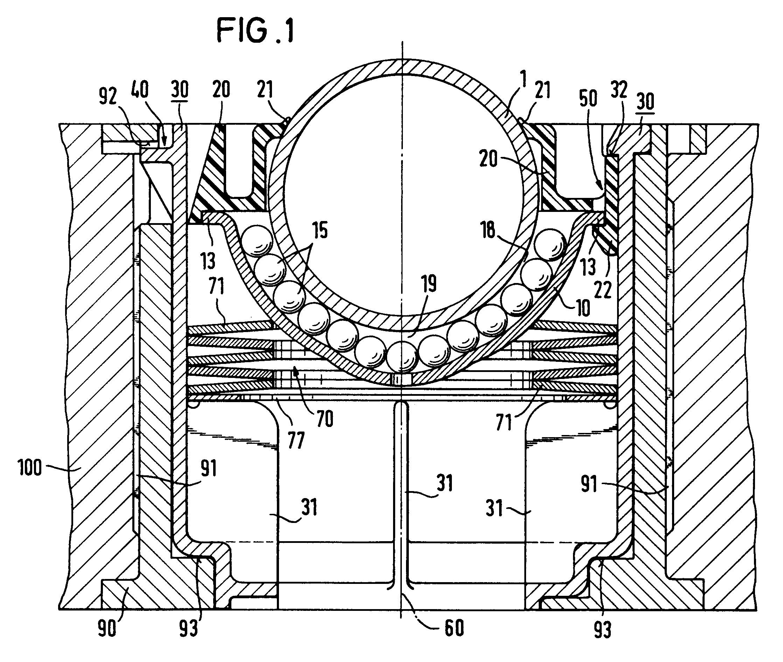

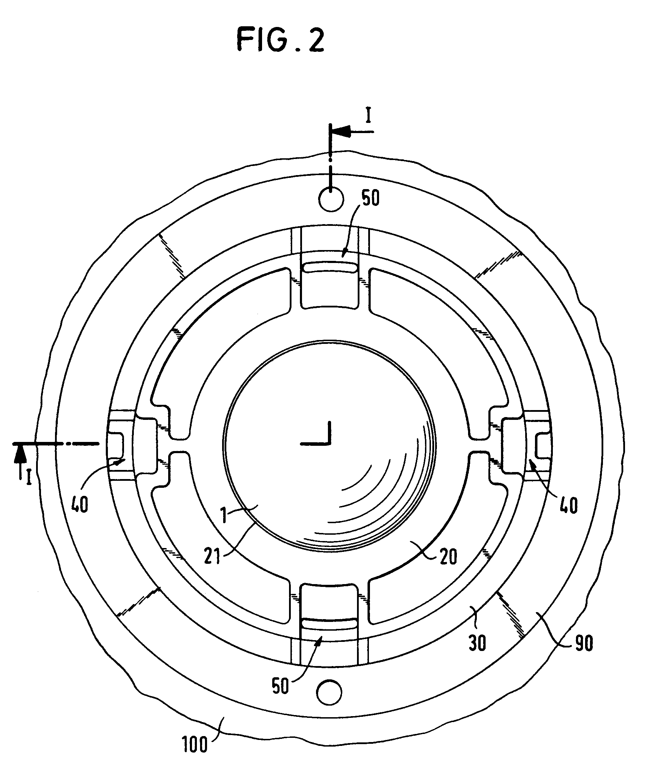

In den Fig. 1 und 2 ist eine Ausführungsform der Förderkugeleinheit eingesetzt in ein Paneel 100 einer Förderbahn gezeigt. In das aus Faser-Verbundwerkstoff bestehende Paneel 100 ist zur Halterung einer Förderkugeleinheit eine insgesamt etwa hohlzylindrische, am Außenumfang mit einer Riffelung 91 versehene Buchse 90 eingegossen oder eingepreßt, die aus Metall, wie beispielsweise einer Leichtmetallegierung bestehen kann. Diese Buchse 90 ist an ihrem in der Fig. 1 oberen Rand mit über den Umfang verteilten Verriegelungsschultern 92 geformt, unter welche im eingesetzten Zustand einschnappend entsprechende Verriegelungselemente 40 des Gehäuses 30 der Förderkugeleinheit eingreifen, um diese im Paneel 100 zu halten. Am unteren Rand in der Fig. 1 ist die Buchse 90 mit einem nach innen ragenden Ringflansch 93 versehen, auf dem sich im eingesetzten Zustand eine entsprechend geformte Schulter des Gehäuses 30 der Förderkugeleinheit abstützt. Wie aus der Schnittdarstellung der Fig. 1 erkennbar ist, sind das Gehäuse 30 und die Buchse 90 im Bereich dieses Ringflansches 93 bezüglich der Mittelachse 60 des Gehäuses 30 asymmetrisch gestaltet, damit die Förderkugeleinheit verdrehsicher in der Buchse 90 des Paneels 100 gehalten wird. Das Gehäuse 30 der Förderkugeleinheit ist von außen gesehen insgesamt als etwa hohlzylindrischer Körper ausgebildet, dessen Außendurchmesser dem Innendurchmesser der Buchse 90 angepaßt ist.

Wie insbesondere in der Fig. 1 gezeigt ist, ist im Inneren des Gehäuses 30 zentrisch zu dessen Mittelachse 60 eine sich nach oben öffnende, etwa halbkugelige Lagerschale 10 angeordnet, in welcher eine Vielzahl von Lagerkugeln 15 in einer die Innenfläche der Lagerschale 10 bedeckenden Schicht nebeneinanderliegender Kugeln angeordnet ist. Auf diesen Lagerkugeln 15 ist eine Förderkugel 1 drehbar gelagert. Die Förderkugel 1 ist von oben her von einer in etwa ringförmigen Kugelführung 20 umgeben, durch deren obere Öffnung der obere Teil der Förderkugel 1 nach oben über die Oberfläche des Paneels 100 hinausragt. Die obere Öffnung der Kugelführung 20 ist als Dichtlippe 21 geformt, welche abdichtend gleitend an der Förderkugel 1 anliegt. Der übrige ringförmige Körper der Kugelführung 20 ist mit Spiel bezüglich der Förderkugel 1 ausgebildet. Am äußeren unteren Rand der Kugelführung 20 sind über den Umfang hinweg verteilt mehrere nach unten ragende Schnappnasen 22 angeformt, welche im zusammengebauten Zustand einschnappend unter einen horizontalen ringförmigen Flansch 13 greifen, der am oberen Rand der Lagerschale 10 radial nach außen ragend geformt ist. Durch diese Schnappnasen 22 werden die Förderkugel 1, die Lagerkugeln 15 und die Kugelführung 20 im zusammengebauten Zustand als Einheit zusammengehalten, so daß weder die Lagerkugeln 15 noch die Förderkugel 1 nach oben aus der Lagerschale 10 herausfallen können. Über den Umfang verteilt sind ferner außen an der Kugelführung 20 Verriegelungselemente 50 angeformt, welche es gestatten, die zusammengehaltene Einheit der Lagerung der Förderkugel 1 von oben her in das Gehäuse 30 einschnappend einzusetzen, wobei diese Verriegelungselemente 50 im eingesetzten Zustand unter eine am oberen inneren Rand des Gehäuses 30 geformte Verriegelungsschulter 32 greifen. Der Außenumfang der Kugelführung ist mit seinem Durchmesser dem Innendurchmesser des Gehäuses 30 angepaßt, so daß sich die Einheit aus Förderkugel 1, Lagerkugeln 15, Lagerschale 10 und Kugelführung 20 innerhalb des Gehäuses 30 entlang der Mittelachse 60 gleitend auf und ab bewegen kann, und dennoch durch die Schultern 32 und die Verriegelungselemente 50 daran gehindert ist, nach oben aus dem Gehäuse 30 herauszufallen.

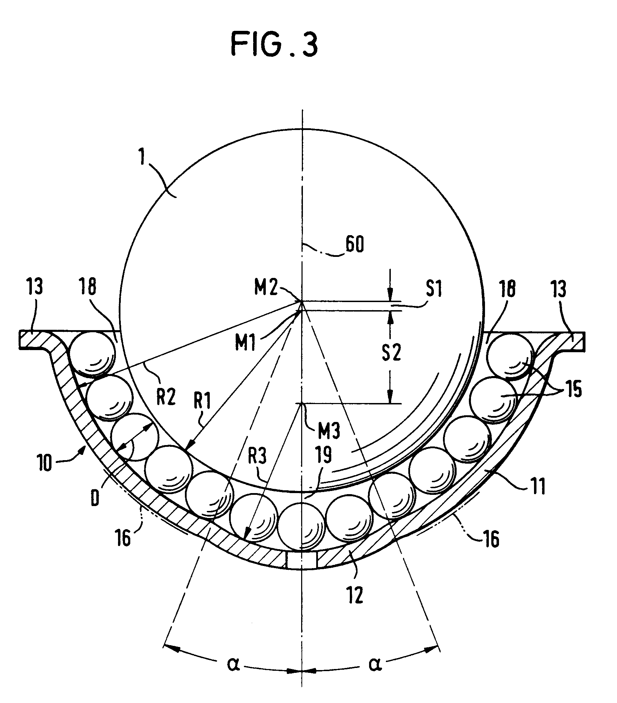

Die Lagerschale 10 erstreckt sich zwar im Abstand zur Förderkugel 1 über einen etwa halbkugelförmigen Bereich, doch ist sie asphärisch derart geformt, daß die Förderkugel 1 über einen Teil der Lagerkugeln 15 nur auf einem ringförmigen Bereich 16 (siehe Fig. 3) der Lagerschale 10 abgestützt ist. Außerhalb dieses ringförmigen Bereichs 16 ist zwischen den Lagerkugeln 15 und der Förderkugel 1 etwas Spiel vorgesehen, d.h., es ist im oberen Umfangsbereich der Lagerschale 10 zwischen den Lagerkugeln 15 und der Förderkugel 1 ein kleiner Spalt 18 gebildet und im unteren Bereich um die Mittelachse 60 herum ein kleiner Spalt 19.

Etwa im unteren Drittel ist das Gehäuse 30 mit mehreren radial nach innen ragenden Rippen 31 versehen, auf denen unter Zwischenlage eines Lagerrings 77 eine Federanordnung 70 abgestützt ist. Diese Federanordnung 70 besteht aus einem Paket von übereinanderliegenden ringförmigen Tellerfedern 71. Die oberste dieser Tellerfedern 71 liegt mit ihrem inneren oberen Rand im ringförmigen Bereich 16 der Lagerschale 10 an. Der Außenumfang der Tellerfedern 71 ist an den Innenumfang des Gehäuses 30 angepaßt. Die Höhe der Federanordnung 70 ist derart bemessen, daß die gesamte in der Lagerschale 10 gehaltene Einheit im unbelasteten Zustand der Förderkugel 1 nach oben gedrückt wird und mit den Verriegelungselementen 50 an der Verriegelungsschulter 32 des Gehäuses 30 anliegt.

Durch die besondere asphärische Gestalt der Lagerschale 10 ist die Förderkugel 1, wie vorstehend bereits erwähnt, über einige der Lagerkugeln 15 nur in einem ringförmigen, zur Mittelachse 60 zentrischen Bereich 16 abgestützt. Dadurch wird erreicht, daß die Lagerkugel 1 selbständig in der Lagerschale 10 zentriert ist und daß diese Zentrierung auch dann beibehalten wird, wenn von oben her auf die Förderkugel 1 durch darauf getragene Frachtbehälter Kräfte ausgeübt werden, die auch eine seitliche, also zur Mittelachse 60 radiale Komponente besitzen.

Die Lagerschale 10 ist ihrerseits in der ringförmigen Federanordnung 70 gerade in dem ringförmigen Bereich 16 abgestützt. Da die Federanordnung 70 mit ihrem Außenumfang passend im Gehäuse 30 sitzt, ist dadurch gewährleistet, daß auch die Lagerschale 10 selbstzentrierend zur Mittelachse 60 des Gehäuses 30 gehalten ist. Dadurch wird erreicht, daß Kräfte, die von oben her mit einer seitlichen Komponente auf die Förderkugel 1 einwirken, über den ringförmigen Bereich 16 der Lagerschale 10 auf die Federanordnung 70 und von dort unmittelbar durch die Wand des Gehäuses 30 und die umgebende Buchse 90 auf das Paneel 100 der umgebenden Förderbahnstruktur übertragen werden. Die vertikalen Kraftkomponenten gelangen dabei über die Federanordnung 70 und gegebenenfalls unter Einfederung derselben über den Lagerring 77 auf die Rippen 31 des Gehäuses 30 und werden hiervon aus vorwiegend über den Ringflansch 93 der Buchse 90 auf das Paneel 100 bzw. die das Paneel 100 tragende Struktur übertragen. Es ergibt sich also sowohl für vertikale als auch für zur Mittelachse 60 radiale Kraftkomponenten ein sehr günstiger Kraftverlauf ohne Biegebeanspruchungen der beteiligten Komponenten.

Vor allem aber ist durch diese Gestaltung gewährleistet, daß die Kugelführung 20 bei Belastungen der Förderkugel 1 praktisch belastungsfrei bleibt. Die Kugelführung 20 kann daher als leichtes und einfaches Kunststoffteil geformt werden, wobei die Dichtlippen 21, die Schnappnasen 22 und die Verriegelungselemente 50 einstückig angeformt werden können.

Wegen der selbstzentrierenden Lagerung der Förderkugel 1 und der Lagerschale 10 ist es überdies ausgeschlossen, daß beim Einfedern der Förderkugel 1 unter Belastung eine Verkantung der Lagerschale 10 und der an ihr verriegelten Kugelführung 20 im Gehäuse 30 auftritt.

In der Fig. 3 ist in schematischer Darstellung die Gestalt der Lagerschale 10 dargestellt, mit der erreicht wird, daß die Förderkugel 1 nur auf einem ringförmigen Bereich 16 abgestützt wird. Wie dargestellt, weist die Lagerschale 10 einen oberen ringförmigen Kugelabschnitt 11 auf, an dessen oberem Rand der horizontale Flansch 13 angeformt ist. Der Radius R2 dieses ringförmigen oberen Kugelabschnitts 11 ist geringfügig größer als die Summe des Radius R1 der Förderkugel 1 und des Durchmessers D der Lagerkugeln 15 und der Mittelpunkt M2 des ringförmigen Kugelabschnitts 11 liegt um eine kleine Strecke S1 über dem Mittelpunkt M1 der Förderkugel 1 auf der Mittelachse 60. Der untere Rand des ringförmigen Kugelabschnitts 11 geht in ein zentrisch die Mittelachse 60 umgebendes Kugelsegment 12 über, dessen Radius R3 kleiner ist als R1 oder R2 und dessen Mittelpunkt M3 um eine beträchtliche Strecke S2 unter den Mittelpunkt M1 auf der Mittelachse 60 liegt, so daß sich das Kugelsegment 12 bezüglich des ringförmigen Kugelabschnitts 11 nach unten ausbeult. Die Lage des Mittelpunkts M3 und die Maßverhältnisse der Radien sind dabei derart gewählt, daß sich das Kugelsegment 12 ausgehend vom Mittelpunkt M2 etwa in einem Winkel $\alpha$ von 20 bis 30° um die Mittelachse herum erstreckt.

Bei einer praktischen Ausführungsform können beispielsweise die nachstehenden Maße vorgesehen sein:

R1 = 12,300 mm     D = 3,175 mm
R2 = 16,020 mm     S1 = 0,600 mm
R3 = 10,000 mm     S2 = 6,215 mm.

Neben der Kugelführung 20 kann auch das gesamte Gehäuse 30 der Förderkugeleinheit aus Kunststoff geformt werden, da die eine wesentliche Kraft übertragenden Teile des Gehäuses 30 nur auf Druck beansprucht werden. Neben geringen Herstellungskosten läßt sich dadurch auch ein geringes Gewicht erzielen.

**Patentansprüche**

1. Förderkugeleinheit, insbesondere zum Bewegen von Frachtgut auf einer Förderbahn, mit einem, eine vertikale Mittelachse (60) aufweisenden, etwa hohlzylindrischen Gehäuse (30), einer zentrisch zur Mittelachse (60) auf einer Vielzahl von Lagerkugeln (15) in einer Lagerschale (10) drehbar gelagerten, über das oben offene Ende des Gehäuses (30) hinausragende Förderkugel (1), einer die Förderkugel (1) ringförmig von oben umgreifenden, die Förderkugel (1) und die Lagerkugeln (15) beweglich in der Lagerschale (10) sichernden Kugelführung (20), und mit einer die Lagerschale (10) von unten her nach oben elastisch vorspannenden, am Gehäuse (30) abgestützten Federanordnung (70), wobei die Förderkugel (1), die Lagerkugeln (15) und die Lagerschale (10) als Einheit innerhalb des Gehäuses (30) bewegbar und entgegen der Federkraft der Federanordnung (70) entlang der Mittelachse (60) nach unten drückbar sind, dadurch **gekennzeichnet,** daß die Lagerschale (10) insgesamt derart asphärisch gestaltet ist, daß die Förderkugel (1) über Lagerkugeln (15) nur auf einem zur Mittelachse (60) konzentrischen ringförmigen Bereich (16) der Lagerschale (10) abgestützt ist, daß die Federanordnung (70) als Paket aus ringförmigen Tellerfedern (71) ausgebildet ist, deren Außendurchmesser dem benachbarten Innendurchmesser des Gehäuses (30) angepaßt ist, und daß die Lagerschale (10) mit ihrem ringförmigen Bereich (16) auf dem inneren Rand der obersten ringförmigen Tellerfeder (71) der Federanordnung (70) abgestützt ist.

2. Förderkugeleinheit nach Anspruch 1, dadurch **gekennzeichnet,** daß sich die Lagerschale (10) in etwa über einen die Förderkugel (1) von unten her im Abstand umgreifenden Halbkugelbereich erstreckt.

3. Förderkugeleinheit nach Anspruch 2, dadurch **gekennzeichnet,** daß der obere, bis zum Rand hin reichende Bereich der Lagerschale (10) als ringförmiger Kugelabschnitt (11) ausgebildet ist, dessen Radius (R2) um ein vorbestimmtes Maß geringfügig größer ist als die Summe des Radius (R1) der Förderkugel (1) und des Durchmessers (D) der Lagerkugeln (15), daß der Mittelpunkt (M2) dieses Kugelabschnitts (11) auf der Mittelachse (60) um ein vorbestimmtes Maß (S1) über dem Mittelpunkt (M1) der Förderkugel (1) liegt, daß sich an den unteren Rand des ringförmigen Kugelabschnitts (11) ein die Mittelachse (60) zentrisch umgebendes, sich nach unten auswölbendes Kugelsegment (12) anschließt, dessen Radius (R3) kleiner ist als der Radius (R2) des ringförmigen Kugelabschnitts (11) und dessen Mittelpunkt (M3) urn ein erhebliches Maß (S2) unter dem Mittelpunkt (M1) der Förderkugel (1) auf der Mittelachse (60) liegt.

4. Förderkugeleinheit nach Anspruch 3, dadurch **gekennzeichnet,** daß sich das Kugelsegment (12) ausgehend vorn Mittelpunkt (M2) des Kugelabschnitts (11) bezuglich der Mittelachse (60) über einen Winkel ($\alpha$) von etwa 20 bis 30° erstreckt.

5. Förderkugeleinheit nach einem der vorhergehenden Ansprüche, dadurch **gekennzeichnet,** daß die Kugelführung (20) die Förderkugel (1) ringförmig lose umgreift und daß am oberen Innenrand der ringförmigen Kugelführung (20) eine gegen die Förderkugel (1) abdichtende Dichtlippe (21) angebracht ist.

6. Förderkugeleinheit nach Anspruch 5, dadurch **gekennzeichnet,** daß die Kugelführung (20) am Umfangsrand mit mehreren über den Umfang verteilten Schnappnasen (22) versehen ist, welche im zusammengebauten Zustand unter einen am oberen Rand der Lagerschale (10) angeformten horizontalen Flansch (13) einschnappend eingreifen.

7. Förderkugeleinheit nach Anspruch 6, dadurch **gekennzeichnet,** daß die Kugelführung (20) einstückig aus Kunststoff geformt ist.

**Claims**

1. A conveyor ball unit, in particular for moving freight material on a conveyor track, comprising a substantially hollow-cylindrical housing (30) having a vertical central axis (60), a conveyor ball (1) which projects beyond the upwardly open end of the housing (30) and which is mounted rotatably concentrically relative to the central axis (60) on a plurality of mounting balls (15) in a mounting shell (10), a ball guide (20) which embraces the conveyor ball (1) in an annular configuration from above and which secures the conveyor ball (1) and the mounting balls (15) movably in the mounting shell (10), and a spring arrangement (70) which is supported against the housing (30) which resiliently biases the mounting shell (10) from below upeardly, wherein the conveyor ball (1), the mounting balls (145) and the mounting shell (10) are movable as a unit within the housing (30) and can be pressed downwardly along the central axis (60) against the spring force of the spring arrangement (70), characterised in that the mounting shell (10) is an overall of an aspherical configuration in such a fashion that the conveyor ball (1) is supported by way of mounting balls (15) only on an annular region (16). which is concentric with respect to the central axis (60), of the mounting shell (10), that the spring arrangement (70) is in the form of a pack of annular plate springs (71) whose outside diameter is matched to] the adjacent inside diameter of the housing (30), and that the mounting shell (10) is supported with its annular region (16) on the inner edge of the uppermost annular plate spring (71) of the spring arrangement (70).

2. A conveyor ball unit according to claim 1 characterised in that the mounting shell (10) extends substantially over a hemispherical region which embraces the conveyor ball (1) from below at a spacing.

3. A conveyor ball unit according to claim 2 characterised in that the upper region of the mounting shell (10), which extends as far as the edge, is in the form of an annular portion of a sphere (11), the radius (R2) of which is slightly larger by a predetermined amount than the sum of the radius (R1) of the conveyor ball (1) and the diameter (D) of the mounting balls (15), that the centre point (M2) of said portion of a sphere (11) lies on the central axis (60) a predetermined amount (S1) above the centre point (M1) of the conveyor ball (1), that disposed adjoining the lower edge of the annular portion of a sphere (11) is a spherical segment (12) which extends concentrically around the central axis (60) and which bulges out downwardly and the radius (R3) of which is smaller than the radius (R2) of the annular portion of a sphere (11) and the centre point (M3) of which is disposed a considerable amount (S2) below the centre point (M1) of the conveyor ball (1) on the central axis (60).

4. A conveyor ball unit according to claim 3 characterised in that the spherical segment (12), starting from the centre point (M2) of the portion of a sphere (11), extends over an angle ($\alpha$) of about 20 to 30° with respect to the central axis (60).

5. A conveyor ball unit according to one of the preceding claims characterised in that the ball guide (20) loosely embraces the conveyor ball (1) in an annular configuration and that disposed at the upper inner edge of the annular ball guide (20) is a sealing lip (21) which seals against the conveyor ball (1).

6. A conveyor ball unit according to claim 5 characterised in that the ball guide (20) is provided at the peripheral edge with a plurality of peripherally distributed snap projections (22) which in the assembled condition snappingly engage under a horizontal flange (13) formed at the upper edge of the mounting shell (10).

7. A conveyor ball unit according to claim 6 characterised in that the ball guide (20) is integrally formed from plastics material.

## Revendications

1. Unité à bille de transport, notamment pour le déplacement de marchandises sur une voie convoyeuse, comprenant un carter (30) qui comporte un axe médian vertical (60) et possède approximativement la forme d'un cylindre creux, une bille de transport (1), qui est montée de façon à pouvoir tourner en étant centrée sur l'axe médian (60), sur une multiplicité de billes de support (15) dans un coussinet de palier (10) et qui fait saillie au-dessus de l'extrémité supérieure ouverte du carter (30), un guide (20) pour la bille de transport, qui enserre à sa partie supérieure, avec une forme annulaire, la bille de transport (1) et retient cette dernière et les billes de support (15) de manière qu'elles puissent se déplacer dans le coussinet de palier (10), et un dispositif à ressorts (70), qui précontraint élastiquement du bas vers le haut le coussinet de palier (10) et est supporté par le carter (30), la bille de transport (1), les billes de support (15) et le coussinet de palier (10) étant déplaçables sous la forme d'une unité à l'intérieur du carter (30) et pouvant être repoussés vers le bas à l'encontre de la force du ressort du dispositif à ressorts (70), le long de l'axe médian (60), caractérisée en ce que le coussinet de palier (10) est agencé globalement avec une forme non sphérique, que la bille de transport (1) est soutenue par l'intermédiaire de billes de support (15) uniquement sur une partie annulaire (16), concentrique par rapport à l'axe médian (60), du coussinet de palier (10), que le dispositif à ressorts (70) est réalisé sous la forme d'un paquet de ressorts Belleville annulaires (71), dont le diamètre extérieur est adapté au diamètre intérieur voisin du carter (30), et que le coussinet de palier (10) prend appui, par sa partie annulaire (16), sur le bord intérieur du ressort Belleville annulaire le plus élevé (71) du dispositif à ressorts (70).

2. Unité à bille de transport selon la revendication 1, caractérisée en ce que le coussinet de palier (10) s'étend approximativement sur une zone hémisphérique entourant à distance et à partir du bas la bille de transport (1).

3. Unité à bille de transport selon la revendication 2, caractérisée en ce que la zone supérieure, qui s'étend jusqu'au bord, du coussinet de palier (10) est réalisée sous la forme d'une section annulaire de sphère (11), dont le rayon (R2) est légèrement supérieur, d'une valeur prédéterminée, à la somme du rayon (R1) de la bille de transport (1) et du diamètre (D) des billes de support (15), que le centre (M2) de cette section de sphère (11) est situé sur l'axe médian (60) au-dessus du centre (M1), en en étant séparé d'une distance prédéterminée (S1), qu'au bord inférieur de la section annulaire de sphère (11) se raccorde un segment de sphère (12) qui entoure d'une manière centrée l'axe médian (60) et est bombé vers le bas et dont le rayon (R3) est inférieur au rayon (R2) de la section annulaire de sphère (11) et dont le centre (M3) est situé sur l'axe médian (60) en étant disposé à une distance importante (S2) au-dessous du centre (M1) de la bille de transport (1).

4. Unité à bille de transport selon la revendication 3, caractérisée en ce que le segment de sphère (12) s'étend sur un angle ($\alpha$) compris entre environ 20 et 30° à partir du centre (M2) de la section de sphère (11), par rapport à l'axe médian (60).

5. Unité à bille de transport suivant l'une des revendications précédentes, caractérisée par le fait que le guide (20) de la bille de transport entoure annulairement, de façon lâche, la bille de transport (1) et qu'une lèvre d'étanchéité (21), qui s'applique de façon étanche contre la bille de transport (1), est disposée sur le bord intérieur supérieur du guide annulaire (20) de la bilie.

6. Unité à bille de transport selon la revendication 5, caractérisée en ce que le guide (20) de la bille comporte, sur le bord périphérique, plusieurs becs d'encliquetage (22) répartis sur la périphérie et qui, à l'état assemblé, s'engagent par encliquetage au-dessous d'une bride horizontale (13) formée sur le bord supérieur du coussinet de palier (10).

7. Unité à bille de transport selon la revendication 6, caractérisée en ce que le guide (20) de la bille est réalisé d'un seul tenant en matière plastique.

FIG.1

# FIG.2

FIG.3